# NEUE EUROPÄISCHE PATENTSCHRIFT

(11) **EP 2 503 893 B2**
(45) Veröffentlichungstag und Bekanntmachung des Hinweises auf die Entscheidung über den Einspruch: **18.10.2017**
(45) Hinweis auf die Patenterteilung: 02.04.2014
(21) Anmeldenummer: 09796337.5
(22) Anmeldetag: 26.11.2009
(51) Int. Cl.: A21B 2/00, A21B 3/04, F24C 7/02, F24C 15/00, A21D 8/06

(54) **VERFAHREN ZUR HERSTELLUNG VON BACKWAREN UND VAKUUMBACKOFEN ZUR DURCHFÜHRUNG DES VERFAHRENS**
METHOD FOR PRODUCING BAKED GOODS AND VACUUM BAKING OVEN FOR PERFORMING THE METHOD
PROCÉDÉ DE FABRICATION DE PRODUITS DE BOULANGERIE ET FOURS SOUS VIDE POUR METTRE EN OEUVRE LE PROCÉDÉ

(43) Veröffentlichungstag der Anmeldung: 03.10.2012
(73) Patentinhaber: Cermak, Adolf, 9450 Altstätten (CH)
(72) Erfinder: Cermak, Adolf, 9450 Altstätten (CH)
(74) Vertreter: Sperling, Thomas
(86) Internationale Anmeldenummer: PCT/EP2009/065924
(87) Internationale Veröffentlichungsnummer: WO 2011/063841

(56) Entgegenhaltungen:
- EP-A1- 1 066 837
- EP-A1- 1 729 065
- EP-A2- 1 906 100
- EP-A2- 1 969 941
- WO-A1-92/02150
- WO-A1-95/04445
- CH-A5- 690 743
- DE-A1- 3 631 348
- DE-A1- 10 254 356
- GB-A- 2 247 815
- GB-A- 191 417 750
- RU-C2- 2 165 707
- US-A- 2 021 772
- 'principles of breadmaking', AMERICAN ASSOCIATION F CEREAL CHEMISTS, ISBN 18911270686 vol. PIET SLUIMER, Seiten 160 - 163

## Beschreibung

Die Erfindung betrifft ein Verfahren zur Herstellung von Backwaren und einen Vakuumbackofen zur Durchführung des Verfahrens.

Unter Backwaren sollen im weiteren Sinne Gebäckprodukte verschiedenster Art verstanden werden. Beispielhaft seien Brot, Brötchen, sonstiges Kleingebäck, Pizza und Kuchen genannt, die wesentliche Eigenschaften durch eine thermische Behandlung bekommen. Eingeschlossen sind Produkte, die als tiefgefrorene Teiglinge aufgetaut und gebacken werden und Produkte, die zunächst zu 45 % bis 90 % teilgebacken und dann, beispielsweise in Verkaufsfilialen, fertiggebacken werden.

An Backwaren werden verschiedene Anforderungen gestellt. Beispielsweise soll das in den Verkaufsfilialen angebotene Brot frisch sein und eine knusprige Kruste aufweisen. Außerdem sollte das Brot auch auf Kundenwunsch schnittfähig sein, um unmittelbar vor dem Verkauf im Beisein des Kunden geschnitten zu werden.

Es ist bekannt, dass mit der gezielten Zugabe von Heißdampf in den Backraum der Backprozess und die Krustenbildung positiv beeinflusst werden kann.
Eine Zugabe von Dampf während des Backprozesses wird auch als Wrasenzugabe bezeichnet.
Eine dazu hergerichtete Vorrichtung geht beispielsweise aus der EP 1 729 065 A1 hervor. Die Dampfzugaben dienen der Verbesserung der gezielten thermischen Führung des Backprozesses und einer gezielten Verkleisterung der äußeren Schichten des Teiglings, um ein verbessertes Gashaltevermögen und ein höheres Gebäckvolumen sowie eine gezielte Krustenbildung zu erreichen.

Auch die Problematik der zu langen Abkühlungszeiten der Backwaren und insbesondere von Brot ist bekannt und wird im Stand der Technik mit verschiedenen Ansätzen zur Intensivkühlung der Backwaren nach dem Backvorgang gelöst.
Eine Variante der Intensivkühlung bietet die Vakuumkühlung der Backwaren.

Somit ist es im Stand der Technik bekannt, Öfen mit gegenüber der Umgebung druckdicht ausgeführten Backräumen zu versehen, um ein Vakuum im Backraum zu erzeugen. Das Vakuum dient der Verdampfung von Wasser aus der Backware und durch den Entzug der Verdampfungsenthalpie erfolgt eine Abkühlung der fertig gebackenen Backware, die durch den Verdampfungsvorgang jedoch Wasser verliert. Ein derartiges Verfahren und eine zugehörige Vorrichtung ist beispielsweise aus der DE 198 01 895 A1 bekannt.

Weiterhin ist aus der EP 1 161 873 A1 ein Backverfahren mit einer Vakuumabkühlungsstufe nach dem Backen bekannt, bei dem Brot, Kleingebäck und Ähnliches innerhalb von nur zwei bis vier Minuten eine Temperatur von 20 °C bis 40 °C erreichen.

Auch die Kombination von Dampfzugabe und Vakuumanwendung innerhalb von Verfahren zur Bereitung von Backwaren ist im Stand der Technik dokumentiert.

Aus der WO 92/02150A1 geht ein Verfahren und eine Vorrichtung zur schnellen Wärmebehandlung von Produkten hervor, die unter Anwendung von

Vakuum zur schnellen Abkühlung einer Backware unmittelbar nach dem Backvorgang gekühlt werden.
Eine Besonderheit des offenbarten Verfahrens besteht darin, dass die Kühlung gleichzeitig mit der Strahlungserwärmung und Krustenbildung erfolgt. Gleichfalls aus diesem Dokument ist die Zugabe von Dampf in den Backraum bekannt.

Auch aus der WO 95/04445 geht ein Verfahren zur Bereitung von Lebensmitteln hervor, bei welchem der Druck im Backraum gegenüber der Umgebung abgesenkt ist und wo das Lebensmittel in Kombination mit Mikrowellenenergie erwärmt wird.

Aus der GB 2 247 815 A ist die dielektrische Erwärmung von Lebensmitteln bekannt. Nach dem offenbarten Verfahren werden wasserhaltige Lebensmittel einer Erwärmung durch Mikrowellen oder Radiowellen ausgesetzt. Eine Dampfzugabe erfolgt, um einen Gegendruck zur internen Dampfentstehung bei der Wärmebehandlung zu bilden. Der Gegendruck verhindert die unkontrollierte Ausdehnung der Dampfblasen im Produkt, die zur Zerstörung der Gebäckstruktur führen können.

Nach der DE 102 54 356 A1 ist ein Verfahren zur Nachbefeuchtung vorgebackener und anschließend tiefgekühlter Backwaren bekannt, wobei die gefrosteten Gebäckprodukte mit Vakuum bis zu einem Restdruck 10 bis 200 Millibar beaufschlagt und durch Zugabe von Sattdampf mit einer vorbestimmten und gewünschten Wassermenge adsorptiv gesättigt werden, um Feuchteverluste, die durch das Backen und Kühlen entstehen, auszugleichen.

In der EP 1 729 065 A1 wird ein Dampfkochapparat offenbart, in welchem Nahrungsmittel mit überhitztem Dampf bei Temperaturen von über 300°C behandelbar sind. Weiterhin ist aus der EP 1 729 065 A1 explizit zu entnehmen, dass die Kondensation des überhitzten Wasserdampfes an der Oberfläche der Lebensmittel zu einem sehr effektiven Wärmeübertragungsprozess führt.

Im EP 1 969 941 A2 werden Vorrichtung und Verfahren zur Herstellung von Brot aus vorgebackenem Brot in einem Ausbackofen durch Erhitzung und nachfolgende Vakuumkühlung im gleichen Ofen dargestellt. Die genannte Erhitzung findet durch Zuführung von Dampf in das Ofeninnere statt, in dem vor dem Ausbackprozess ein Vakuum erzeugt und das Ofeninnere durch eine elektromagnetische Übergangsstrahlung (TR radiation) erwärmt wird, bevor die Erhitzung mit Dampf beginnt.

Den gattungbildenden Verfahren und Vorrichtungen nach dem Stand der Technik ist jedoch der gemeinsame Nachteil zu eigen, dass die während oder nach der Backphase gekühlten Backwaren häufig unerwünscht und schwer kalkulierbar Gewicht in Form von Wasser durch die Verdampfungsvorgänge verlieren. Die Einhaltung von Gebäckgewichten ist jedoch aus verschiedenen, auch rechtlichen Gründen, erforderlich und somit ist die schwer kalkulierbare Gewichtsreduktion durch die Prozessführung in der Kühlphase als signifikanter Nachteil zu nennen.
Beim Kühlprozess wird dem Produkt zwischen 4 % und 10% des Gesamtgewichtes der Produktfeuchte entzogen, teilweise sogar noch mehr. Dieser Feuchtigkeitsentzug muss durch entsprechende Prozessanpassung, beispielsweise durch kürzere Backzeiten, kompensiert werden, was oft das Eingehen von Kompromissen bedeutet. So musste bislang zum Beispiel akzeptiert werden, dass durch verkürzte Backzeiten auch die Bildung vor allem von Röstaromen in der Kruste reduziert wird. Diese Aromen entstehen aufgrund der Maillard-Reaktion erst in den letzten Minuten einer Backphase.

Ein weiterer Nachteil des Standes der Technik besteht darin, dass in herkömmlichen Vakuumkühlkammern die Chargen von heißen Produkten auf einmal eingebracht werden müssen, was oft die Anschaffung von mehreren kleinen Vakuum-Kammern erforderlich macht, statt mit einer großen Kammer arbeiten zu können, in die zum Beispiel mehrere Wagen hintereinander eingebracht werden. Dies ist darin begründet, dass durch die in unbeheizten Kammern auftretende unkontrollierte innere Kondensation beziehungsweise das ebenfalls unkontrollierte Ausströmen von Wasserdampf vom Gebäckihneren durch die Kruste sich Krumen- und Krustenbeschaffenheit unterschiedlich verändert.

Besondere Probleme ergeben sich bei der Verarbeitung von Tiefkühlteiglingen. Das Auftauen und die Gare ist gerade bei zugeführtem Heißdampf häufig nicht zufriedenstellend, da der Heißdampf relativ schnell in die äußeren Schichten der Teiglinge eindringt und dort zu einer zu frühen Verkleisterung der Stärke führt. Dadurch kommt es zu einer ungenügenden Teigentwicklung und einer nicht produktspezifischen Krustenfarbe, welche das Produkt unverkäuflich macht.

Auch bei der Produktgruppe der halbgebackenen Backwaren ist die Nachverkleisterung beim Fertigbacken unter Zuhilfenahme nur von Heißdampf aufgrund des schwer kontrollierbaren Dampfzustandes problematisch.

Weiterhin haftet den Vorrichtungen der Nachteil an, dass während der Vakuumkühlphase zu Beginn der Druckabsenkung Kondensatbildung auftritt. Das Problem besteht nun darin, dass das sich bildende Kondensat zu Hygieneproblemen führen kann. Insbesondere während der ersten Chargen bei kalten Vakuumkammerwänden kommt es zu unkontrollierter Kondensatbildung. Dadurch entsteht eine Prozessungenauigkeit, verbunden mit unterschiedlichen Produktqualitäten und zunehmender Verschmutzung des gebildeten Kondensats und damit zu einer Verkeimung der Kammer und der Vakuumleitungen.

Der Erfindung liegt somit die Aufgabe zugrunde, ein zeit- und kosteneffizientes Verfahren zur Herstellung von Backwaren zur Verfügung zu stellen, welches eine gleichbleibende und reproduzierbare Produktqualität ermöglicht und welches insbesondere in der Lage ist, die- Gewichtsreduktion während der Kühlung der Produkte zu minimieren.

Weiterhin ist es eine Aufgabe des Verfahrens, die Anwendung von Dampf bei der Verarbeitung von teilgebackenen Gebäckprodukten oder von tiefgefrorenen Teiglingen reproduzierbar und produktverbessernd zu ermöglichen und im Zusammenspiel mit der Vakuumkühlung die oft zu früh einsetzende Verkleisterung der Stärke in den äußeren Schichten eines Teiglings und die unerwünschte Bildung von Kondensat zu verhindern.

Erfindungsgemäß wird die Aufgabe durch ein Verfahren zur Herstellung von Backwaren mit den Verfahrensschritten des unabhängigen Anspruchs 1 gelöst.

Die Erfindung besteht auch darin, dass ein Vorbacken oder Vorwärmen des Backgutes erfolgt. Das Vorbacken oder Vorwärmen kann beispielsweise bis zu 120 s betragen, bei speziellen Anwendungen kann diese Phase auch länger ausgebildet sein.

Der Druck wird bei Verfahrensschritt b) im Backraum auf beispielsweise 10 mbar oder 20 mbar abgesenkt. Die Phase der Druckabsenkung wird circa 30 s andauern und wird optional von einer kurzen Haltephase von 3 s ergänzt.

In dem Verfahrensschritt d) wird dem Backraum Kaltdampf zugegeben und der Druck steigt dann auf 60 mbar im Backraum an. Unter Kaltdampf wird Dampf in Abhängigkeit des bestehenden Druckes von 10 °C bis 50 °C verstanden.

Die Zugabe von Dampf wird in Abgrenzung zur indirekten Wärmeübertragung mittels Wärmeübertragern als direkte, weil stoffgebundene, Wärmeübertragung bezeichnet. Dies trifft sowohl für die Verfahrensstufe d), der Kaltdampfzugabe und für die Verfahrensstufe e), der Heißdampfzugabe zu. Parallel und zumindest zeitlich den Dampfzugaben überlappend wird in Verfahrensschritt c) mittels Wärmeübertragern indirekt Wärme in den Backraum eingebracht.
Somit erfolgt konzeptionsgemäß zeitweise eine parallele, indirekte und direkte Wärmeübertragung, wobei die direkte Wärmeübertragung mittels Dampf in Abstimmung mit dem Temperaturverlauf des Backgutes zunächst als Kaltdampfzugabe und nachfolgend als Heißdampfzugabe realisiert ist.

Zwischen den Phasen der Bedampfung mit Kaltdampf und der Bedampfung mit Heißdampf kann eine Phase ohne Dampfzufuhr liegen, während welcher im Backraum zwar indirekt mittels Wärmeübertragern geheizt aber kein Dampf eingebracht wird. Der Druck steigt weiter langsam an. Die eigentliche Backphase setzt sich somit aus verschiedenen Phasen zusammen, die einander überlappen können.
Unter Heißdampf soll Dampf mit einer Temperatur von größer 50 °C bis 100 °C verstanden werden. Durch die druckdichte Ausführung des Ofens ist es theoretisch auch möglich, Dampftemperaturen von mehr als 100 °C zu erreichen.

Vorteilhaft sind nach den Verfahrensschritten b), e) und f) vor den nachfolgenden Verfahrensschritten jeweils Haltephasen vorgesehen.

Der Dampf für die Verfahrensschritte d) und e) wird im Backraum selbst erzeugt.
Dazu ist der Dampferzeuger zur Beherrschbarkeit der jeweils optimalen Dampftemperatur innerhalb der Vakuumkammer angeordnet. Nur dann entspricht die Dampftemperatur dem jeweils herrschenden Druck, ohne die Gefahr einer Überhitzung.

Gemäß der Ausgestaltung der Regelung wird über die Verdampfungsmuldenheizung des Dampferzeugers zusammen mit dem Kaltwasser oder dem temperaturgeregelten Heißwasser die Dampferzeugung direkt im Backraum realisiert.

Beim Druckausgleich am Ende eines Abkühl- oder Backprozesses gemäß Verfahrensschritt g) ist es von entscheidender Bedeutung für die Produktqualität, dass dieser Druckausgleich je nach Empfindlichkeit der gerade gebackenen oder gekühlten Produkte in seinem Verlauf gesteuert wird. Erfolgt der Druckausgleich beispielsweise zu schnell kann es durch die Druckwirkung der einströmenden Luft zu mehr oder weniger feinen Krustenrissen kommen die während der Lagerdauer größer werden und später beim Fertigbacken zum Absplittern von Krustenteilen führen können. So wie die Abkühlung einem bestimmten Kurvenverlauf folgt, und zwar unabhängig von der jeweiligen Beschickungsmenge, geschieht das auch beim Druckausgleich. Die Regelung erfolgt dabei über ein stetig- angesteuertes Klappenventil, beispielsweise einem Butterfly-Ventil. In den Steuer- und Regelungsprogrammen sind- Druckausgleichskurven für jedes Produkt beziehungsweise jede Produktfamilie zur Sicherung der Qualität vorgegeben.

Ein Vakuumbackofen löst die gestellten Aufgaben erfindungsgemäß dadurch, dass ein Backraum vorgesehen ist, der von einer vakuumdicht verschließbaren Kammer umschlossen ist. Weiterhin sind Mittel zum Beheizen des Backraumes und darüber hinaus eine Kammerwandheizung- zur Vermeidung von Kondensation an der Kammerwand vorgesehen. Eine Regel- und. Steuereinrichtung zur Regelung und Steuerung der Komponenten ist in den Vakuumbackofen integriert. Weiterhin ist eine Vakuumpumpe zum Erzeugen eines Unterdruckes im Backraum und ein Dampferzeuger vorgesehen. Der Dampferzeuger weist Mittel zur Erzeugung von Kaltdampf und von Heißdampf auf.

Der Dampferzeuger besteht bevorzugt aus einer Düse, einer Verdampfungsmulde und einer Verdampfungsmuldenheizung, wobei die Düse über eine Kaltwasserzufuhr und eine temperaturgesteuerte Heißwasserzufuhr mit kaltem oder warmen bzw. heißem Wasser versorgt wird.

In der Heißwasserzufuhr ist vorteilhaft ein Wasservorwärmer integriert, der dafür sorgt, dass das Heißwasser eine dem Kammerdruck entsprechende Temperatur kurz vor der Verdampfung bei Eintritt in den Backraum bereits aufweist und nur mit geringer Leistung über die Verdampfungsmuldenheizung zum Verdampfen gebracht werden muss.

Die Erfindung wird bevorzugt dadurch komplettiert, dass ein Druckausgleichsventil mit einem Reinluftfilter vorgesehen ist und dass weiterhin als Mittel zur Beheizung eines Backraumes Heizelemente für Oberhitze und Unterhitze vorgesehen sind.
Besonders vorteilhaft ist der Einsatz eines Infrarotheizelementes vom Typ STIR als Heizelement Oberhitze.

Die Konzeption der Erfindung besteht darin, dass durch Dampf verschiedener Temperaturen zu verschiedenen Zeitpunkten, verschiedene Effekte bei der zu behandelnden Backware erzeugt werden.
Erst durch die Differenzierung des Dampfeintrages in Kaltdampf und Heißdampf ist die Herstellung einwandfreier Produkte möglich. Funktional wird unterschieden, dass der Kaltdampf zur Erwärmung der Produkte von Umgebungstemperatur, Kühltemperatur oder Gefriertemperatur zum Einsatz kommt. Insbesondere ist die Kaltdampfverwendung zum Auftauen und zur Gare von gekühlten oder tiefgefrorenen Teiglingen oder Zwischenprodukten vorteilhaft.
Funktional davon zu unterscheiden ist der Einsatz von Heißdampf als Unterstützung der Backphase und der Wiederverkleisterung der möglicherweise aufgrund der längeren Lagerung bei teilgebackenen Produkten im Bereich von Temperaturen über dem Gefrierpunkt rekristallisierten Stärke.

Nur durch die Dampferzeugung innerhalb des Backraumes wird in Folge des Zusammenspiels von Druck in der Backkammer, Vorwärmtemperatur des für die Dampferzeugung notwendigen Wassers und der Oberflächentemperatur des Dampferzeugers eine für die Wiederverkleisterung von rekristallisierter Stärke optimale Backatmosphäre geschaffen.

Konzeptionsgemäß wird während der Phase der Heißdampfzugabe die Dampftemperatur den jeweils herrschenden Druckverhältnissen im Backraum angepasst.
Bei einem Kammerdruck von 250 mbar beispielsweise beträgt die Speisewassertemperatur für die Dampferzeugung 73 °C und dies entspricht der Temperatur des Dampfes selbst. Dadurch wird einerseits erreicht, dass in der Auftau- beziehungsweise Gärphase die Stärke nicht vorzeitig verkleistert und andererseits die unerwünschte Kondensation des Dampfes an den Innenwänden der Vakuumkammer verhindert wird. Außerdem wird dadurch die nötige Temperatur der Kammerwände auf einem absoluten Minimum, also gerade über dem jeweiligen Taupunkt, gehalten, was wiederum den Energieeinsatz positiv beeinflusst und die Wärmeabstrahlung während der Kühlphase in Grenzen hält.

Durch die Verwendung von Heizelementen für die Oberhitze vom STIR-Typ wird die Eindringtiefe der Infrarotstrahlung erhöht und die Backgeschwindigkeit auf ein dem Umluftbacken vergleichbares Niveau angehoben. Die Zufuhr von Heißdampf im letzten Teil der Backphase sorgt dann für eine Beschleunigung der Backphase und damit für kürzere Backzeiten insgesamt und für mehr Produktfeuchte und somit für geringere Ausbackverluste beziehungsweise für ein höheres Endgewicht und ein deutlich besseres Frischhaltevermögen.

Weiterhin wurde überraschend herausgefunden, dass auch das Problem der Flüchtigkeit zusätzlicher stofflicher Komponenten der Backwaren mit der Differenzierung in Kaltdampf und Heißdampf gelöst wurde.
Eine Beimischung von Aromastoffen in den Heißdampf führt nämlich bei vergleichbaren Versuchen der Fachwelt nicht zum gewünschten Ergebnis, da die schnellflüchtigen Aromabestandteile sofort wieder ausgeschieden werden. Durch die Aufteilung in Kalt- und Heißdampf ist es möglich die Aromen in der Kaltdampfphase zuzufügen. Die Aromen bleiben dann aufgrund der geringeren Krumentemperaturen mit 70 °C bis 80 °C bei teilgebackenen Ausgangsprodukten auch im Produkt.

Ein besonderer Vorteil durch die kontrollierte Beheizung der Kammerwände und der Türen besteht darin, dass die Kammer und die Kammerwände trocken und somit hygienisch einwandfrei bleiben, da kein Kondensat an diesen Oberflächen mehr gebildet wird. Damit können auch mehrere Chargen hintereinander mit Wartezeiten von einigen Minuten dazwischen gekühlt und/oder gebacken werden, ohne dass Qualitätsunterschiede bei den Endprodukten auftreten. Dies ermöglicht die Reduzierung der Anzahl der erforderlichen Vakuumkammern und damit die Anlagenkosten beträchtlich.

Zur Verhinderung von unkontrolliertem Wasserdampfaustritt aus den zu kühlenden Produkten und damit Kondensation an den kalten Innenflächen der Vakuumkammer ist innerhalb der Kammer eine Isolierung in Form von CNS-Verbundplatten mit einem Zentimeter Polyurethanisolierung oder Ähnliches angebracht. Dies spart Energie, da ansonsten die ganze Masse der Vakuumkammer bei Kühlprozessen oder auch zu Beginn der Inbetriebnahme des Vakuumbackofens mit bis zu zwei Tonnen Edelstahl auf einer Temperatur von 80 °C bis 95 °C gehalten werden muss.

Ein wesentlicher Vorteil für das Produkt besteht darin, dass durch die Zugabe von Kalt- und Heißdampf in abgestimmter Reihenfolge während oder am Ende des Kühlprozesses so viel Feuchtigkeit zugeführt werden kann, dass am Prozessende ein ähnliches bzw. gleiches oder sogar höheres Gewicht der Backware im Vergleich zum Prozessbeginn vorhanden ist.

Zu einer besonders ausgeglichenen Feuchtigkeitsverteilung in der Krume und der Kruste trägt nach einer Ausgestaltung der Erfindung bei, dass in den Verlauf der Abkühlphasen Haltezeiten eingeplant werden. Dabei schließt das Saugventil der Vakuumpumpe und der Druck in der Kammer steigt durch Restverdampfung um beispielsweise 20 bis 30 mbar an, wonach die Abkühlung fortgesetzt wird. Es entsteht eine Druckkurve mit einer Art Sägezahn-Verlauf.

Zusammengefasst lassen sich die Vorteile wie folgt darstellen:
■ Einbringen von Feuchtigkeit und damit Gewicht während des Kühl- und Backvorganges,
■ Einbringen von erwünschten Inhaltsstoffen der Backwaren, wie Aromen, Vitaminen, Mineralstoffen und Spurenelementen mit dem Kaltdampf,
■ Vollständige Verkleisterung der Stärke in bereits vorgebackener Ware, selbst wenn diese nur bei Raumtemperatur gelagert wurde und dies auch bei mehreren Tagen Lagerdauer,
■ Keine Kondensation von Wasserdampf aus dem Produkt an den Oberflächen des Backraumes während des Backens und Kühlens und damit Prozesssicherheit in Bezug auf gleichbleibende Krumen-/Krustenbeschaffenheit und keine Kontaminierung innerhalb der Kammer durch zunehmend unreines Kondensat,
■ Wartezeiten beim Beschicken von Chargen mit mehreren Wagen beziehungsweise Backgutträgern haben keinen Einfluss mehr auf die Produktqualität,
■ durch die Anwendung von Kalt- und temperaturgesteurtem Heißdampf in verschiedenen aufeinander abgestimmten Phasen ist eine Aneinanderreihung von Prozessen möglich, die bisher undenkbar waren: Auftauen, Gären, Backen, Befeuchten und/oder Aromatisieren, Abkühlen bis Verpackungs-/Schnittfestigkeit.

Die mit der Erfindung erzielten Vorteile sind vielgestaltig und verschiedener Natur.
Besonders hervorzuheben sind die technischen Vorteile, die darin bestehen, dass eine hohe Prozessgeschwindigkeit beim Backen von 2 bis 3-mal höher als bei herkömmlichen Technologien und beim Kühlen bis zu 100-mal schneller erreicht werden können.
Die Prozessdauer für das Auftauen, Gären, Backen und Abkühlen auf Schnittund Verpackungstemperatur bei Brot beispielsweise beträgt weniger als eine Stunde im Vergleich zu bisher erforderlichen 3 bis 4 Stunden

Das Backen und Kühlen erfolgt in ein und derselben Kammer, was zur Folge hat, dass nicht verschiedene Vorrichtungen angeschafft und platzmäßig vorgehalten werden müssen.

Als technologische Vorteile sind anzuführen die absolute Frische beim Fertigbacken von vorher teilgebackenen Produkten durch vollständige Wiederverkleisterung der teilweise schon rekristallisierten Stärke und die verlängerte Haltbarkeit bei verpackten Produkten durch die bis zu 100-mal schnellere Abkühlung in der durch die vorangegangene Backphase immer noch sterilen Kammer. Somit wird ein Keimbefall aus der Umgebung praktisch ausgeschlossen.

Als ökologische Vorteile sind zu nennen, dass der Energieverbrauch beim Backen und Kühlen durch die anteilige direkte Wärmeübertragung deutlich geringer ist als bei konventionellen Verfahren der ausschließlich indirekten Wärmeübertragung. Besonders durch den Effekt, dass die Verdampfungswärme beim Kühlen bzw. die Kondensationswärme beim Backen beinahe ausschließlich das Produkt und nicht auch das Trägermaterial, wie die Backbleche und so weiter heizt oder kühlt macht das Verfahren sehr energieeffizient.

Zu den ökonomischen Vorteilen zählt, dass durch die hohe Prozessgeschwindigkeit eine bis zu 3-fache Ofenkapazität erreicht wird. Dies führt zu Vorteilen durch Platzgewinn an Stellfläche, Energie und Handling. Ebenso wird die Retourware deutlich reduziert aufgrund der kürzeren Reaktionszeiten und der längeren Frischhaltung der Backwaren.

Das teilgebackene Rohprodukt kann mittels der erfindungsgemäßen Technologie über mehrere Tage bei Umgebungstemperatur oder bei eventuell +5 °C im Kühlraum gelagert werden und muss nicht, wie heute üblich, tiefgekühlt verarbeitet werden.

Nicht zuletzt ökonomisch vorteilhaft ist, dass das Verfahren mittels der offenbarten Vorrichtung auf einfache Weise durchgeführt werden kann und kein Fachpersonal erforderlich ist, was zur Kostenreduzierung und zu Verfügbarkeitserhöhungen führt. Die schnelle Verfügbarkeit sorgt für weniger Retourware da die Menge der gegen Ladenschluss zu backenden Produkte kleingehalten werden kann. Die Prozessabläufe für den Auftauvorgang und die Gare auch von großvolumigen Tiefkühlteigen, wie Brot, sind steuer- und regelungstechnisch hinterlegt, sodass ein Eingreifen der Bedienperson nicht oder nur höchst selten erforderlich ist. Dadurch entstehen Wettbewerbsvorteile vor allem bei geschnittenen oder frisch verpackten Produkten.

Der offensichtliche Vorteil für den Käufer der erfindungsgemäß behandelten Backwaren besteht darin, dass beispielsweise geschnittenes Brot in kurzer Zeit nach dem Fertigbacken frisch und ofenwarm ausgehändigt werden kann.

Weitere Einzelheiten, Merkmale und Vorteile der Erfindung ergeben sich aus der nachfolgenden Beschreibung von Ausführungsbeispielen mit Bezugnahme auf die zugehörigen Zeichnungen. Es zeigen:
- Fig. 1:: Prinzipdarstellung eines Vakuumbackofens,
- Fig. 2:: Diagramm mit dem Temperatur-, Druck- und Gewichtsverlauf über der Zeit beim Produkt HB-Kastenbrot 800 g beim Fertigbacken,
- Fig. 3:: Diagramm mit dem Druckverlauf über der Zeit bei einem Kühl- und Befeuchtungsverfahren und
- Fig. 4:: Diagramm mit dem Druckverlauf über der Zeit beim Einsatz von Tiefkühlteigl ingen.

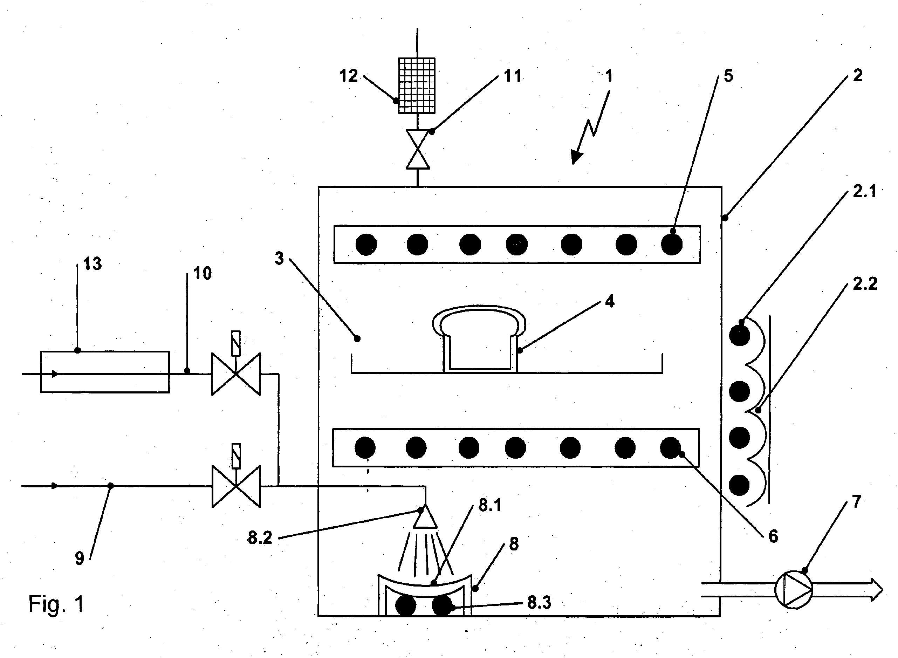

In Figur 1 ist eine Prinzipdarstellung eines Vakuumbackofens gemäß der beanspruchten Erfindung dargestellt. Der Vakuumbackofen 1 besteht im Wesentlichen aus einer vakuumdicht verschließbaren Kammer 2- mit Kammerwänden, in denen eine Kammerwandheizung 2.1 und nützlicherweise eine Kammerwandisolierung 2.2 integriert ist. Die Kammerwandheizung 2.1 ist beispielsweise als Rohrschlange, Heizmatte, Heizvlies oder Heizfolie ausgestaltet, wobei die unmittelbar zu beheizende Kammerwand druckstabil und mit geringster aufzuheizender Masse ausgestaltet ist. Die Kammer 2 umschließt einen Backraum 3 in welchem das Backgut 4, beispielsweise auf Backblechen oder Rosten, anordenbar ist.

Nach einer vorteilhaften Ausgestaltung des Vakuumbackofens 1, der auch als reine Vakuumkühlkammer nutzbar ist, sind die Kammerwände mit einem Verbundmaterial isoliert ausgeführt. Die innere Schicht besteht dabei aus einem relativ dünnem Metallblech, welches mit der Kammerwandheizung 2.1 thermisch kontaktiert ist und mit einer Kammerwandisolierung 2.2 aus einem wärmeisolierenden Kunststoff als anschließende Schicht versehen ist. Damit wird ermöglicht, dass nicht die gesamte druckdichte und stabile Kammerwand beheizt werden muss, um die Temperatur oberhalb der Kondensationstemperatur des Dampfes in der Kammer 2 zu halten, sondern, dass nur die innerste relativ dünne Metallschicht entsprechend beheizt werden muss. Dies führt zu erheblichen Energieeinsparungen.

Der Vakuumbackofen 1 wird in üblicher Weise indirekt mittels eines Heizelementes Oberhitze 5 nach dem STIR-Prinzip und eines Heizelementes Unterhitze 6 beheizt. Darüber hinaus ist an dem Vakuumbackofen 1 eine Vakuumpumpe 7 vorgesehen, die eine Evakuierung des Backraumes 3 ermöglicht.

Eine Besonderheit des Vakuumbackofens 1 stellt die Ausgestaltung des Dampferzeugers 8 dar, der in der Kammer 2 angeordnet ist. Dieser Dampferzeuger 8 ist derart ausgestaltet, dass er sowohl Kaltdampf als auch Heißdampf zu erzeugen in der Lage ist. Dazu ist eine Düse 8.2 im Backraum 3 angeordnet aus welcher Wasser gerichtet in eine Verdampfungsmulde 8.1 gesprüht wird. Die Verdampfungsmulde 8.1 wird mittels einer Verdampfungsmuldenheizung 8.3 beheizt. Die Wasserzufuhr für den Dampferzeuger 8 wird über zwei Stränge gebildet. Zum Ersten über eine Kaltwasserzufuhr 9, welche geeignet ist kaltes Wasser über die Düse 8.2 in den Backraum 3 einzubringen. Alternativ ist eine Heißwasserzufuhr 10 vorgesehen, die es ermöglicht in den Backraum 3 über die Düse 8.2 heißes beziehungsweise vorgewärmtes Wasser einzubringen. Dazu ist die Heißwasserzufuhr 10 bevorzugt mit einem Wasservorwärmer 13 ausgestattet, der auf effiziente Weise die Erwärmung des Wassers und damit die Bereitstellung eines Heißwasserstromes ermöglicht.

Weiterhin ist, um einen Druckausgleich des Backraums 3 gegenüber der Umgebung durchführen zu können, ein Druckausgleichsventil 11 vorgesehen, welches mit einem Reinluftfilter 12 versehen ist. Bei einem Druckausgleich des Vakuums im Backraum 3 gegenüber der Umgebung wird die in den Backraum 3 durch das Druckausgleichsventil eintretende Luft im Reinluftfilter 12 zuvor steril gefiltert. Somit können keine Kontaminationen aus der Umgebungsluft mit dieser in den Backraum 3 gelangen.

Die erfindungsgemäße Vorrichtung ist in besonderer Art geeignet, ein Verfahren zur effizienten Bereitung von Brot, Kleingebäck, Kuchen und Ähnlichem als Backware aus tiefgekühlten Teiglingen eingesetzt zu werden.

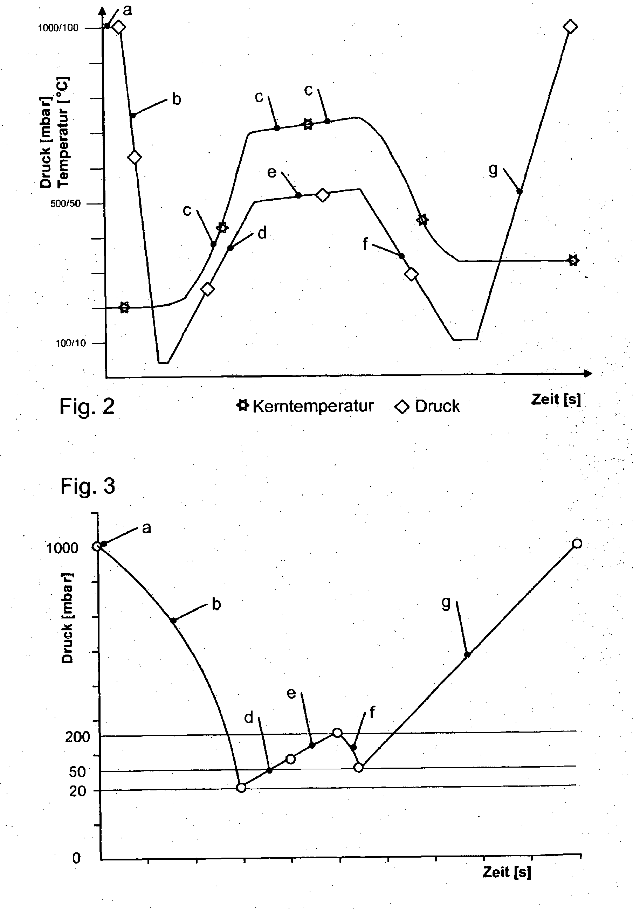

In Figur 2 ist ein Diagramm mit dem Temperatur- und Druckverlauf über der Zeit für das teilgebackene Produkt HB-Kastenbrot, 800 g beim Fertigbacken dargestellt.

Es sind zwei Ordinaten, einmal als Druck und einmal als Temperaturskala angegeben. Auf der Abszisse wird die Zeit aufgetragen.

Der Temperaturverlauf der Kerntemperatur des Produktes wurde mit Sternsymbolen und der Druckverlauf durch Rautensymbole kenntlich gemacht.

Zur Verdeutlichung des Verfahrensablaufs werden die einzelnen Phasen, korrespondierend mit den Verfahrensschritten, mit Kleinbuchstaben nummeriert angegeben.

In Verfahrensschritt a) erfolgt das Einbringen des Backgutes 4 in den Backraum 3 bei Umgebungsdruck. Die Kerntemperatur befindet sich korrespondierend dazu auf Umgebungstemperaturniveau. Der Backraum wird dann vakuumdicht verschlossen und dann in Verfahrensschritt b) evakuiert, woraufhin der Druck von circa 1000 mbar Umgebungsdruck auf ungefähr 30 mbar fällt. Da dem Produkt praktisch keine Feuchte entzogen wird, sinkt weder die Temperatur noch das Gewicht stark ab. Schon in Phase a) setzt die indirekte Beheizung des Backraumes 3 mit Phase c) mittels Heizelementen ein. Diese Backphase wird dann unterstützt durch den Verfahrensschritt e) in dem der Backraum 3 zusätzlich direkt beheizt wird, indem der Backraum 3 mit Heißdampf beaufschlagt wird. Nach circa 360 bis 480 s Gesamtprozessdauer wird der Backraum 3 in Verfahrensschritt g) erneut evakuiert und das soeben fertiggebackene Produkt dadurch gekühlt. Der Druck sinkt bei dieser Phase bis auf 50 mbar und die korrespondierende Temperatur im Inneren des Backgutes 4 stellt sich bei ca. 33 °C ein, die Kruste ist deutlich wärmer. Das Verfahren wird abgeschlossen, indem in Verfahrensschritt h) der Backraum 3 steril belüftet und anschließend das Backgut 4 aus dem Backraum 3 entnommen wird. Die Gesamtdauer des Fertigbackens eines 800 g Brotes benötigt circa 540 s vom Einbringen des Backgutes 4 in den Backraum 3 bis zum Entnehmen des fertig gebackenen Brotes.

In Figur 3 ist der Prozessverlauf des Kühlens, Befeuchtens und eventuell Aromatisierens in einem Diagramm dargestellt. Dabei ist wiederum auf der Ordinate der Druck und auf der Abszisse die Zeit angegeben. Die einzelnen Verfahrensschritte werden analog zur Darstellung in Figur 2 mit einer Nummerierung versehen.
Nach dem Einbringen des zu behandelnden Gutes in die Vakuumkühlkammer bei Verfahrensschritt a) wird die Kammer 2 vakuumdicht verschlossen und in Verfahrensschritt b) bis zu einem Druck von 20 mbar evakuiert. Es schließt sich analog zu Verfahrensschritt d) das Befeuchten mit Kaltdampf und eventuell das Befeuchten mit Heißdampf analog zu Verfahrensschritt e) an. Beim Befeuchten mittels Dampf werden optional Aromen dem Dampf, bevorzugt dem Kaltdampf zugegeben. Die Aromen werden vom Dampf mit auf das zu behandelnde Gut transportiert und von diesem aufgenommen beziehungsweise abgeschieden. Auf diese Weise gelangen die Aromen nicht nur äußerlich auf die Gutoberfläche sondern mittels des Dampfes teilweise in das Gut hinein, wodurch die Aromen besser als nur oberflächlich gebunden sind.

Bei der Dampfbehandlung des Gutes steigt der Druck in der Kammer 2 auf 200 mbar an. Abschließend wird bei Verfahrensschritt g) der Backraum erneut evakuiert und das Produkt dadurch wiederum gekühlt und anschließend in Verfahrensschritt h) belüftet. Das Beispiel aus Figur 3 zeigt, dass der Vakuumbackofen 1 auch ohne Nutzung der Heizfunktion als Vakuumkühlkammer einsetzbar ist. Besonders vorteilhafterweise ist dann möglich, ein warmes und wasserhaltiges Gut unter Beibehaltung seines Gewichtes mittels eines Vakuumkühlverfahrens zu kühlen. Gemäß der Grundkonzeption des Verfahrens erfolgt das Befeuchten, welches mit einem Aromatisieren verbunden sein kann, nach der Hauptkühlstufe, sodass die Aromen und der Wassergehalt die in der Kaltdampf- und Heißdampfstufe zugegeben werden in einer zweiten kurzen Kühlstufe nicht wieder vollständig entfernt werden. Im Ergebnis führt dies zu einer gewichtserhaltenden Vakuumkühlung unter Nutzung der Kondensation von Wasser in der Kalt- und Heißdampfphase. Die Gewichtserhaltung wird dadurch möglich, dass während der Bedampfung der Wasserdampf durch die relativ hohe Differenztemperatur auch in das Produkt hinein abgeschieden wird und nicht nur an der äußersten Schicht kondensiert.

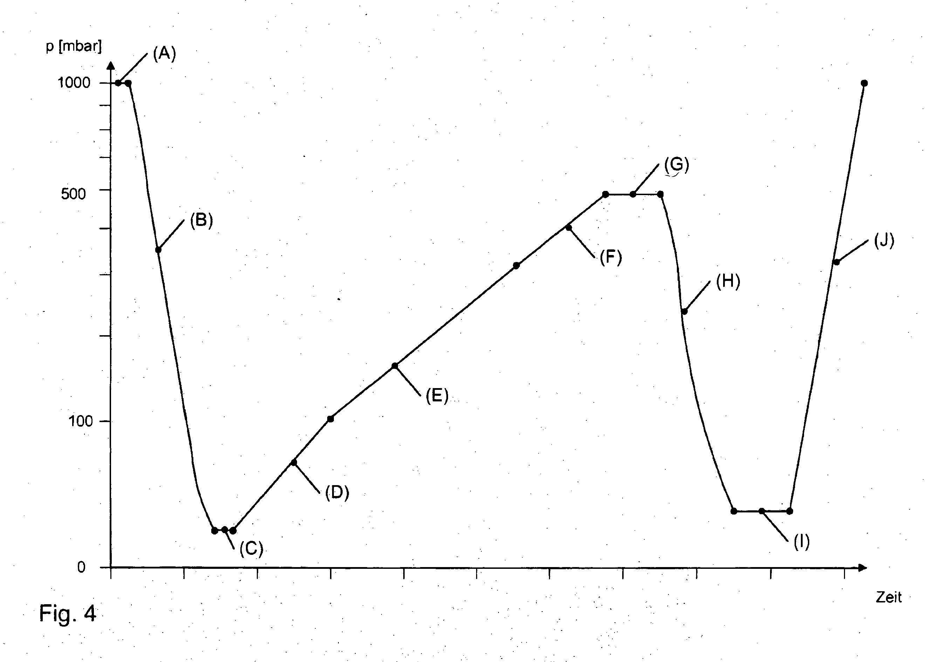

In Figur 4 ist ein Druck-Zeit-Diagramm mit dem Verfahrensablauf beim Backen von Tiefkühlteiglingen dargestellt. Die zeichnerische Umsetzung der Kurve ist nicht maßstabsgetreu skaliert, sondern stellt den prinzipiellen Verlauf des Parameters Druck über der Zeit dar.
Dabei wird der Teigling zunächst in einer ersten Phase (A) vorgewärmt, bevor in einer anschließenden Phase (B) der Druck im Backraum 3 auf circa 10 mbar abgesenkt wird. Die Druckabsenkung erfolgt über einen Zeitraum von circa 30 s, wonach sich eine Haltephase (C) von einigen Sekunden anschließt.
Es schließt sich eine Auftau- und Vorgarephase (D) über einen Zeitraum von 15 Min an, in welcher über die Heizelemente 5, 6 Wärme in den Backraum 3 eingetragen wird. Gleichzeitig wird in dieser Phase Kaltdampf im Dampferzeuger 8 erzeugt, welcher eine Temperatur von ca. 10 °C bis 45 °C aufweist. Dieser kalte Dampf kondensiert schließlich gezielt an der kältesten Stelle im Backraum 3, nämlich den tiefgekühlten Teiglingen, die anfänglich Temperaturen von deutlich unterhalb 10 °C aufweisen. Nicht kondensieren wird dieser Kaltdampf an den durch die Kammerwandheizung 2.1 erwärmten Wänden der Kammer 2. Durch die Kammerwandbeheizung wird die Kondensatbildung an den Wänden vermieden, was erhebliche hygienische Probleme bei vergleichbaren Vakuumbacköfen nach dem Stand der Technik vermeidet.

Es schließt die Backphase (E) an, welche sich über einen Zeitraum von 10 Min erstreckt und in eine Nachverkleisterungsphase (F) von 15 bis 20 Min durch die Zufuhr von Heizdampf übergeführt wird. Während der Backphase steigt die Temperatur im Inneren des Backgutes auf circa 90 °C, die Krustentemperatur des Backgutes beträgt etwa 160 °C und es wird im Dampferzeuger 8 über die Einleitung von temperaturgesteuertem Heißwasser durch die Heißwasserzufuhr 10 in der Verdampfungsmulde 8.1 durch Beheizung mit der Verdampfungsmuldenheizung 8.3 Heißdampf hergestellt, der eine höhere Temperatur als die Kerntemperatur der Backwaren aufweist. Somit kondensiert der Heißdampf wiederum an den relativ kühleren Backwaren unter Abgabe der Kondensationsenthalpie an diese. Bei der Einordnung der angegebenen Temperaturen ist zu beachten, dass die Temperaturen der Heizelemente circa 240 °C betragen.

Nach Erreichen der Endtemperatur beim Backen schließt sich eine Haltephase (G) an, nach welcher eine Druckabsenkung (H) bei dann ausgeschalteten Heizelementen 5, 6 erfolgt.

Die Druckabsenkung und damit Kühlung des Backgutes 4 erfolgt wiederum bis zu einem Druck von circa 50 bis 80 mbar, wobei Temperaturen im Inneren der Backwaren von ca. 35 °C bis 40 °C erreicht werden. Nach einer kurzen Haltephase (I) wird der Backraum 3 über das Druckausgleichsventil 11 in der Druckausgleichsphase (J) belüftet und der Backraum 3 an den Umgebungsdruck angeglichen.
Dies erfolgt geregelt nach einer empirisch für die jeweiligen Produkte ermittelten Druckverlaufskurve und über einen Zeitraum von 10 bis 60 s, um ein Kollabieren der Backwaren und deren Zusammendrücken zu verhindern.

Das fertige Gebäck besitzt nun eine Krustentemperatur von circa 35 °C bis 45 °C und kann ohne Probleme geschnitten werden. Der Kunde erhält somit ein geschnittenes Brot welches ihm noch mit einer fühlbaren Restofenwärme ausgehändigt werden kann:

### LISTE DER BEZUGSZEICHEN

- 1: Vakuumbackofen
- 2: Kammer
- 2.1: Kammerwandheizung, Heizfolie
- 2.2: Kammerwandisolierung
- 3: Backraum
- 4: Backgut
- 5: Heizelement Oberhitze
- 6: Heizelement Unterhitze
- 7: Vakuumpumpe
- 8: Dampferzeuger
- 8.1: Verdampfungsmulde
- 8.2: Düse
- 8.3: Verdampfungsmuldenheizung
- 9: Kaltwasserzufuhr
- 10: Heißwasserzufuhr
- 11: Druckausgleichsventil
- 12: Reinluftfilter
- 13: Wasservorwärmer

## Patentansprüche

1. Verfahren zur Herstellung von Backwaren mit folgenden Verfahrensschritten, bei dem
a) Backgut (4) in einen Backraum (3) bei Umgebungsdruck eingebracht wird, wonach ein Vorbacken oder Vorwärmen des Backgutes (4) erfolgt,
b) der Backraum (3) anschließend vakuumdicht verschlossen und evakuiert wird,
c) der Backraum (3) indirekt beheizt wird,
d) der Backraum (3) zusätzlich direkt mit Kaltdampf beaufschlagt wird,
e) der Backraum (3) zusätzlich direkt mit Heißdampf beaufschlagt wird,
f) geregelt über eine Verdampfermuldenheizung (8.3) des Dampferzeugers (8) zusammen mit dem Kaltwasser oder dem temperaturgeregelten Heißwasser die Dampferzeugung direkt im Backraum (3) realisiert wird,
g) der Backraum (3) erneut evakuiert und dadurch das Backgut (4) gekühlt wird und
h) der Backraum (3) abschließend belüftet wird.

2. Verfahren nach Anspruch 1, **dadurch gekennzeichnet, dass** in Verfahrensschritt b) der Druck im Backraum (3) auf 10 mbar abgesenkt wird.

3. Verfahren nach Anspruch 1 oder 2, **dadurch gekennzeichnet, dass** während Verfahrensschritt d) der Druck auf 60 mbar im Backraum (3) ansteigt.

4. Verfahren nach einem der Ansprüche 1 bis 3, **dadurch gekennzeichnet, dass** während Verfahrensschritt e) der Druck auf 200 mbar bis 800 mbar im Backraum (3) ansteigt.

5. Verfahren nach einem der Ansprüche 1 bis 4, **dadurch gekennzeichnet, dass** nach den Verfahrensschritten b), e) und g) und vor den nachfolgenden Verfahrensschritten Haltephasen vorgesehen sind.

6. Verfahren nach einem der Ansprüche 1 bis 5, **dadurch gekennzeichnet, dass** in Verfahrensschritt d) der Kaltdampf im Backraum (3) erzeugt wird.

7. Vakuumbackofen (1) zur Herstellung von Backwaren nach einem Verfahren der vorhergehenden Ansprüche,
- mit einem Backraum (3),
- der von einer vakuumdicht verschließbaren Kammer (2) umschlossen ist,
- mit Mitteln zum Beheizen des Backraumes (3),
- mit einer Kammerwandheizung (2.1) zur Vermeidung von Kondensation an der Kammerwand,
- mit einem Dampferzeuger (8) im Inneren des Backraums (3), der Mittel zur Erzeugung von Kaltdampf und Heißdampf aufweist und der aus einer Düse (8.2), einer Verdampfungsmulde (8.1) und einer Verdampfungsmuldenheizung (8.3) aufgebaut ist, wobei die Düse (8.2) eine Kaltwasserzufuhr (9) und eine temperaturgesteuerte Heißwasserzufuhr, in der ein Wasservorwärmer (13) integriert ist, aufweist,
- mit einer Regel- und Steuereinrichtung,
- mit einer Vakuumpumpe (7) zum Erzeugen eines Unterdruckes im Backraum (3).

8. Vakuumbackofen (1) nach Anspruch 7, **dadurch gekennzeichnet, dass** ein Druckausgleichsventil (11) mit Reinluftfilter (12) vorgesehen ist.

9. Vakuumbackofen (1) nach einem der Ansprüche 7 oder 8, **dadurch gekennzeichnet, dass** als Mittel zum Beheizen des Backraumes (3) ein Heizelement Oberhitze (5) und ein Heizelement Unterhitze (6) vorgesehen sind.

10. Vakuumbackofen (1) nach Anspruch 9, **dadurch gekennzeichnet, dass** als Heizelement Oberhitze (5) ein Infrarotheizelement STIR vorgesehen ist.

## Claims

1. Method for the production of baked goods, comprising the following method steps, in which
a) dough pieces (4) are introduced into a baking chamber (3) at ambient pressure, whereafter pre-baking or pre-heating of the dough pieces (4) takes place,
b) the baking chamber (3) is then sealed in vacuum-tight manner and evacuated,
c) the baking chamber (3) is indirectly heated,
d) the baking chamber (3) is additionally acted upon directly with cold steam,
e) the baking chamber (3) is additionally acted upon directly with superheated steam,
f) the steam generation in the baking chamber is realized in a controlled way directly in the baking chamber (3) via an evaporation pan heater (8.3) of the steam generator (8) together with the cold water or the temperature-controlled hot water,
g) the baking chamber (3) is evacuated again and the dough pieces (4) are thereby cooled, and
h) the baking chamber (3) is finally vented.

2. Method according to claim 1, **characterized in that** in method step b) the pressure prevailing in the baking chamber (3) is lowered to 10 mbar.

3. Method according to claim 1 or 2, **characterized in that** in method step d) the pressure prevailing in the baking chamber (3) rises to 60 mbar.

4. Method according to any of claims 1 to 3, **characterized in that** in method step e) the pressure prevailing in the baking chamber (3) rises to 200 mbar or up to 800 mbar.

5. Method according to any of claims 1 to 4, **characterized in that** holding phases are provided after method steps b), e) and g) and before the subsequent method steps.

6. Method according to any of claims 1 to 5, **characterized in that** in method step d) the cold steam is generated in the baking chamber (3).

7. Vacuum oven (1) for the production of baked goods according to a method of the preceding claims,
- with a baking chamber (3),
- which is enclosed by a chamber (2) which can be sealed in vacuum-tight manner,
- with means for heating the baking chamber (3),
- with a chamber wall heating (2.1) in order to avoid condensation on the chamber wall,
- with a steam generator (8) in the interior of the baking chamber (3), which has means for generating cold steam and superheated steam, and which is composed of a nozzle (8.2), a vaporization cavity (8.1) and an evaporation pan heater (8.3), wherein the nozzle (8.2) features a cold water supply (9) and a temperature-controlled hot water supply having a water pre-heater (13) integrated therein,
- with a regulating and a control device,
- with a vacuum pump (7) for generating a negative pressure in the baking chamber (3).

8. Vacuum oven (1) according to claim 7, **characterized in that** a pressure compensating valve (11) is provided with a pure air filter (12).

9. Vacuum oven (1) according to any of claims 7 or 8, **characterized in that** a top heat heating element (5) and a bottom heat heating element (6) are provided as means for heating the baking chamber (3).

10. Vacuum oven (1) according to claim 9, **characterized in that** an STIR infrared heating element is provided as top heat heating element (5).

## Revendications

1. Procédé pour la fabrication de produits de boulangerie, comprenant les étapes de procédé suivantes, dans lequel
a) des pâtons (4) sont introduits dans une chambre de cuisson (3) à la pression ambiante, puis la pré-cuisson ou la préchauffage des pâtons (4) a lieu,
b) la chambre de cuisson (3) est ensuite fermée de façon étanche au vide et est évacuée
c) la chambre de cuisson (3) est chauffée indirectement,
d) la chambre de cuisson (3) est additionnellement directement soumise à de la vapeur froide,
e) la chambre de cuisson (3) est additionnellement directement soumise à de la vapeur surchauffée,
f) la génération de vapeur dans la chambre de cuisson est réalisée de façon regulée directement dans la chambre de cuisson (3) par l'intermédiare d'un chauffage de benne d'évaporation (8.3) du générateur de vapeur (8) conjointement avec de l'eau froide ou de l'eau chaude à température contrôlée,
g) la chambre de cuisson (3) est évacuée de nouveau et les pâtons (4) sont ainsi refroidis,
h) la chambre de cuisson (3) est enfin ventilée.

2. Procédé selon la revendication 1, **caractérisé en ce que** dans l'étape de procédé b) la pression régnant dans la chambre de cuisson (3) est abaissée à 10 mbar.

3. Procédé selon la revendication 1 ou 2, **caractérisé en ce que** dans l'étape de procédé d) la pression régnant dans la chambre de cuisson (3) augmente à 60 mbar.

4. Procédé selon l'une quelconque des revendications 1 à 3, **caractérisé en ce que** dans l'étape de procédé e) la pression régnant dans la chambre de pression (3) augmente à 200 mbar ou jusqu'à 800 mbar.

5. Procédé selon l'une quelconque des revendications 1 à 4, **caractérisé en ce que** des phases d'arrêt sont pourvues après les étapes de procédé b), e) et g) et avant les suivantes étapes de procédé.

6. Procédé selon l'une quelconque des revendications 1 à 5, **caractérisé en ce que** dans l'étape de procédé d) la vapeur froide est générée dans la chambre de cuisson (3).

7. Étuve à vide (1) pour la fabrication de produits de boulangerie selon un procédé selon l'une quelconque des revendications précédentes,
- avec une chambre de cuisson (3),
- étant entourée par une chambre (2) qui peut être fermée de façon étanche au vide,
- avec des moyens pour chauffer la chambre de cuisson (3),
- avec un chauffage de la paroi de la chambre (2.1) pour éviter la condensation sur la paroi de la chambre,
- avec un générateur de vapeur (8) à l'intérieur de la chambre de cuisson (3) présentant des moyens pour la génération de la vapeur froide et de la vapeur surchauffée, et étant composée d'une buse (8.2) d'une cavité d'évaporation (8.1) et un chauffage de benne d'évaporation (8.3), dans lequel la buse (8.2) présente une alimentation en eau froide (9) et une alimentation en eau chaude à température contrôlée présentant une préchauffage d'eau intégré dans celle-ci,
- avec un dispositif de régulation et de commande,
- avec une pompe à vide (7) pour la génération d'une pression négative dans la chambre de cuisson (3).

8. Étuve à vide (1) selon la revendication 7, **caractérisée en ce qu'** une soupape de régulation de pression (11) est équipée avec un filtre à l'air pur (12).

9. Étuve à vide (1) selon l'une quelconque des revendications 7 ou 8, **caractérisée en ce qu'**un élément chauffant à chaleur supérieure (5) et un élément chauffant à chaleur inférieure (6) sont prévus en tant que moyens pour chauffer la chambre de cuisson (3).

10. Étuve à vide (1) selon la revendication 9, **caractérisée en ce que qu**'un élément chauffant STIR infrarouge est pourvu en tant qu'élément chauffant à chaleur inférieure (5).
